# EUROPEAN PATENT SPECIFICATION

(11) **EP 3 483 577 B1**
(45) Date of publication and mention of the grant of the patent: **28.07.2021**
(21) Application number: 17201315.3
(22) Date of filing: 13.11.2017
(51) Int. Cl.: G01L 5/24, G01M 5/00, G01L 3/08, G01L 3/10, G01L 5/04, G01L 5/10

(54) **SYSTEM AND METHOD FOR DETERMINING TENSION OF A NON-LIVING OBJECT**
SYSTEM UND VERFAHREN ZUR BESTIMMUNG DER SPANNUNG EINES NICHT-LEBENDEN OBJEKTS
SYSTÈME ET PROCÉDÉ DE DÉTERMINATION DE TENSION D'UN OBJET NON VIVANT

(43) Date of publication of application: 15.05.2019
(73) Proprietor: TensionCam Systems AB, 417 60 Göteborg (SE)
(72) Inventor: NILSAGARD, Jonas, 417 60 Göteborg (SE); TAKMAN, Olle, 435 37 Mölnlycke (SE)
(74) Representative: Valea AB

(56) References cited:
- WO-A1-02/061292
- WO-A1-2009/005468
- US-A1- 2009 192 731
- US-B1- 6 829 944

## Description

### TECHNICAL FIELD

The present disclosure relates to a kit and a method for determining tension of a non-living object, i.e. an object that is not a human or an animal body or part thereof, by means of a macroscopic pattern located on the object.

### BACKGROUND

In conventional techniques for measuring tension induced from forces applied to objects, e.g. torque or linear tension applications, sensors have been fastened to the object to be measured, and then an electrical coupling is established between the sensors and conditioning and analyzing electronics. This has drawbacks, for instance in a need for the electrical coupling to be maintained with a suitable quality over time, which is a problem in applications involving rotary parts forming the object of interest while the conditioning and analysis electronics is stationary.

A typical example of such a situation is the use of strain gauges using resistive techniques measuring torque in a rotary shaft. Strain gauges are further quite expensive and limit the applicability to certain test measurements and are thus not especially suited for routine setups. The strain gauges will need calibration before measurement to obtain reliable measurements. Strain gauges are typically glued to the object to be measured. However, the glue is often not stable over time and there will thus be a need for recalibration to obtain reliable measurements over time.

It is further known to measure tension by means of an optical system, i.e. an optical camera with an optical sensor determining tension by means of an optical pattern. Such an optical system is disclosed in patent document WO 2009/005468 A1, wherein an optical camera is utilized to acquire an image of a pattern located on an object of interest. In an embodiment disclosed in that document, the user approaches the equipment to test and enters a probe comprising the optical camera into a fixture located in relation to the pattern such as to provide a rigid receiving fixture and allow for high reproducibility between measurements when the probe is removed and later put back again.

However, if using an optical system, there are high demands for precision when measuring tension. It is for example desirable to have an even illumination, since an uneven illumination could give rise to reflections, glares and/or shadows, thereby resulting in image analysis errors. If utilizing the probe and fixture mentioned above, it is desirable that the probe is attached in an exact and repeatable way, such that the pattern is determined from straight ahead. If the pattern instead is viewed by the optical camera from a slightly oblique angle, the pattern determined by the optical camera in the image will be distorted, which is very difficult or impossible to differentiate from the pattern distortion caused by the tension. Hence, the optical system is highly sensitive to the relative orientation of the optical camera in relation to the pattern on the object. The optical system is further very sensitive to dirt. If the pattern is partly covered by dirt, the optical camera can simply not see it and the determined pattern will not be a representative image of the pattern of the object.

Document US 2009/192731 A1 discloses a device for monitoring the health state of hydrocarbon production equipment. The device has a plurality of targets, which are associated with the hydrocarbon production equipment. A record of the initial target positions and/or dimensions relative to the hydrocarbon production equipment is created. A sensor that is compatible with the targets is used to observe the targets and produce a sensor output. An analysis device uses the record of the initial positions, dimensions and the sensor output to determine one or more health state parameters, which may be used to determine the health state of the hydrocarbon production equipment.

Document WO 02/061292 A1 relates to a load indicating member provided with a permanent identifying mark which can be read and used to determine ultrasonic measurement parameters specific to the load indicating member to provide more precise and more reliable load measurements by compensating for differences resulting from manufacturing variations in individual load indicating member. The parameters specific to the load indicating member can be stored in coding applied to the load indicating member or in a database that can be accessed remotely.

It is also known from prior art to utilize a system comprising a magnetic sensor for measuring a magnetic pattern.

### SUMMARY

The object of the present disclosure is to overcome or ameliorate at least one of the disadvantages of the prior art, or to provide a useful alternative.

The object above may be achieved by the subject-matter of claims 1 or 12. Embodiments are set forth in the appended dependent claims, in the following description and in the drawings.

Thus, the present disclosure relates to a kit according to claim 1 for determining tension of a non-living object by means of a macroscopic pattern located on the object. The kit comprises a system as described herein and the non-living object. The system comprises a near-object sensor comprising a sensing element arranged to acquire data comprising an array of measurement values of the pattern, the array having at least two dimensions. The system further comprises an analysis device arranged to receive the data from the sensor and to analyse the data for determining the tension of the object, i.e. the tension applied to at least part of the object.

The non-living object is typically a mechanical component, e.g. a screw, a bolt, a washer, a nut, a shaft, a beam, a rod, a belt, a cable, a bearing ring or any other mechanical component which may be exposed to tension, or a plurality of mechanical components. The mechanical component may form part of a fastening arrangement, e.g. being a screw, a bolt, a nut, an anchor, a load cell, a lashing and/or a turnbuckle.

The tension is typically caused by one or more forces being applied to at least part of the object, e.g. a pull force, a pressing force, a pressure, a shearing force, a torsional force, a bending force, gravity, a force caused by a temperature difference or any combination of such forces. Such forces are known to induce tension in the object, which may be determined with the system and the method as described herein.

Tension may be determined on structures being load bearing and the object may be part of another larger entity, such as an apparatus, a machine or a vehicle, e.g. a bolt or a combined washer/screw solution. Furthermore, the tension may be determined directly on a larger object, e.g. a load bearing part of a roller/ball bearing assembly. As is known to the skilled person, when mounting a bearing on a shaft, the bearing may be fixed using crimp methods and thus the inner ring and/or outer ring of the bearing may subjected to forces pre-tensioning the bearing.

The pattern is located on the object. The pattern may be located on the surface of the object. The pattern may also be protected, e.g. by a protective surface coating, such as a lacquering, or a protective cover. Anyway, the pattern is determinable from the outside of the object. Hence, the sensor is e.g. able to determine the pattern through the protective coating or cover, which e.g. may be electrically and/or thermally non-conductive. The protective coating or cover is thus selected to suitably function together with the sensor.

The pattern is macroscopic. Typically the pattern has a largest extension of at least 0.01 mm, preferably of at least 0.1 mm, more preferably of at least 1 mm, the largest extension being determined as the longest straight line going through the pattern.

The pattern may be intrinsic or be provided on at least part of a surface of the object.

An intrinsic pattern exists on the object without any extra treatment or application, e.g. a natural surface structure or a pattern integrally formed on part of the object as a result of the manufacture of the object.

If provided, the pattern may be provided with the purpose of the determining tension. The providing may include applying one or more patterns to the object. The pattern may be e.g. applied to the object by printing, laser gravure, mechanical gravure, etching, boring, milling, turning, sputtering or electrical discharge machining. The pattern may be an applied surface structure like knurling. As an alternative, the pattern may be provided on a separate film that is permanently or non-permanently attached to the non-living object, e.g. as a printed pattern on a plastic or metallic film, which is glued to the non-living object or attached by means of at least one mechanical fastener.

The pattern may be provided for another main purpose than determining tension, but anyway the pattern may be useful for the determining tension. Examples of such patterns are a thread of a screw, a bolt or a nut. Other examples are a QR code or a print, e.g. a text or a number. Such a pattern may be applied to the non-living object by any of the methods mentioned above.

The pattern typically comprises a plurality of pattern elements. The pattern may be regular or irregular. A regular pattern is repetitive, i.e. the pattern repeats the pattern elements. An example would be a pattern comprising a plurality of dots, i.e. the dot being a repeating pattern element, with a pre-selected distance in between. The pattern may comprise a variety of different pattern elements. The term regular refers to when the pattern is in an untensioned condition, corresponding to the non-living object being in an untensioned condition. The pattern element has a predefined depth and/or a predefined height, e.g. the pattern element being a dent or a protrusion.

The pattern may be represented as different material properties, e.g. pattern elements being zones having different conductivity properties. In that case, the pattern may comprise dents being filled by an insulating material, while the rest of the pattern is conductive, i.e. insulating "islands" in a "sea" of conductive material, or vice versa.

The pattern may comprise a code, which may be unique for the object the pattern is located on. The code may be readable by means of an encryption key, e.g. provided as an algorithm in the analysis device. If knowing the identity of the object, further information e.g. about tension characteristics of that object may be linked to the object via the identity.

The pattern may be formed with a known distance between the pattern elements, which may be utilized as a reference for the data analysis. Then it would not be necessary to store information of a reference data array for the purpose of determining the tension, but this may be of interest anyway, since it may show a difference over time for the tension. Another solution would be to obtain a reference by determining the distance between the pattern elements through some other measurement, e.g. using a mechanical arrangement, e.g. a micrometre screw or similar length measuring device, or an optical measurement arrangement, e.g. a laser device.

As an alternative or a complement, the pattern itself, as determined by the sensor, may be used as a reference for determining the distance between the pattern elements by using the fact that the induced tension operates in a certain direction mainly and therefore affects the distance between pattern elements mainly in a first direction and leaves the distances between pattern elements in a second direction, e.g. being perpendicular to the first direction, more or less unaffected, or by analysing the relationship between the pattern elements.

As yet an alternative or complement, reference information may be included in the pattern itself, e.g. as information points comprised in the pattern, e.g. having information about position of pattern element or distance between pattern elements when in an untensioned or in a tensioned condition, in which force of a known magnitude and known direction of application has been applied to at least part of the object. As an alternative, or a complement, the pattern may comprise information about tension characteristics of that object, i.e. information about the object's reaction to a plurality of tensions.

If knowing the distance between the pattern elements in the reference, it is indirectly possible to deduce the maximum distance to the pattern from the sensing element by means of the acquired data.

The near-object sensor is a piezoelectric sensor. The near-object sensor is configured to measure a depth or height of pattern elements comprised in the pattern. The sensor may be supplied by energy, in a wired or wireless way.

The near-object sensor of the system described herein differs from the sensors of prior art systems, using an optical camera with an optical sensor for determining tension. Such a prior art system typically also uses one or more lenses to get a suitable quality of the image. This differs from the near-object sensor of the system described herein, for which there is no need, or even no use, to include a lens in the sensor. The near-object sensor of the system described herein further differs from magnetic sensors used in prior art systems.

Sometimes the space around the object available for making measurements is minimal and an analysis may with the system and method described herein be conducted in confined spaces and without having to dismantle apparatus located around an object of interest.

The near-object sensor is a contact sensor, i.e. it operates in direct contact with the object, such that the sensing element is in contact with the object. The sensor is attached to or attachable to the object, such that the sensing element at least partly covers the pattern.

As an alternative, which alternative is not within the scope of the claims, the near-object sensor may instead have a small interspace between the pattern on the object and the sensing element, e.g. up to 10 mm, up to 5 mm, or up to 2 mm. The use of an interspace may be suitable if the object is adapted to be rotated and/or linearly translated, e.g. a shaft or a beam, such that the object then is allowed to be displaced in relation to the sensor. However, it may be advantageous to keep the distance between the pattern on the object and the sensing element of the sensor as small as possible in order to provide a compact system.

The sensing element comprises an array of sensor subunits. The array may span a two-dimensional area, e.g. being organized in rows and columns, whereby each row and column may contain any number of sensor subunits and not necessarily the same number of sensor subunits. Preferably the sensing element comprises at least 10x10 sensor subunits. The sensing element may have a highest resolution of at least 2 sensor subunits per millimetre, preferably at least 4 sensor subunits per millimetre, more preferably at least 10 sensor subunits per millimetre. Thereby, a pattern element typically is covered by a plurality of sensor subunits. The sensor subunits may have a square or rectangular shape. However, also other shapes are feasible, e.g. a hexagonal shape, or a mixture of shapes.

As an alternative to having the array of sensor subunits, which alternative is not within the scope of the claims, the function of the sensor may include scanning in one or two dimensions. The sensor may in that case comprise a linear array of sensor subunits, e.g. a row of sensor subunits, such that the sensor is arranged to scan in one direction. As yet an alternative, also not within the scope of the claims, the sensor may be adapted to scan in two directions, e.g. just having a single sensor subunit.

The acquired data comprise an array of measurement values of the pattern, the array having at least two dimensions. The data directly or indirectly represents a depth or a height of the pattern elements comprised in the pattern, e.g. if the pattern is provided by laser gravure, mechanical gravure, etching, boring, milling, turning, sputtering or electrical discharge machining.

The analysis device may be incorporated in a common encapsulation, i.e. a housing, together with the sensor, or they may be two separate units that are wiredly or wirelessly connected to each other.

For many applications it is preferred to have a thin sensor or sensing element, e.g. having a thickness of less than 3 mm, less than 1 mm or less than 0.5 mm. This is especially useful if having a separate analysis device and/or if the sensing element or sensor has a non-planar geometry or is flexible.

The data analysis may include making a representation of the data. Preferably, the representation of the data has at least two dimensions. The data may be represented as an array of grey levels, e.g. from 0 to 255. Such data is easy to visualize as a grey-level image. As an alternative, the data may be visualized as a colour image. In those cases, the grey level or the colour may represent the depth or the height of the pattern element. Each pixel of the image may correspond to a local position within the pattern and the grey level/ colour of that pixel may correspond to the depth or height of the pattern element in that local position.

The data analysis may further include methods commonly utilized within image analysis e.g. a centroid algorithm or an algorithm determining the geometrical centre of the pattern element. The analysis of data may e.g. include comparing the determined pattern with a reference corresponding to the object in an untensioned or tensioned condition, in which force of a known magnitude and known direction of application has been applied to at least part of the object. Information of the reference may be included in the pattern itself, as mentioned above.

By utilizing a system as described herein, the sensor can be made insensitive to uneven illumination and could also work without illumination.

Further, the system is less sensitive to dirt than the prior art optical system described above. If the pattern e.g. is partly covered by dirt, the sensor of the system described herein will nevertheless be able to determine the pattern through the dirt, because, since the sensor is not an optical camera with an optical sensor, the dirt will not constitute an optical barrier to the sensor.

The sensor of the system as described herein can be positioned much closer to the pattern of the object than the optical sensor of the camera of the prior art optical system described above. No lenses are utilized or needed. This is in contrast to the prior art optical system, wherein lenses are beneficial to have a good image quality. High quality lenses may be quite expensive. However, if the lens is not good enough, the lens itself may cause distortion of the image. Since the sensor of the system as described herein is much closer to the pattern, there is much less risk of distorting the determined pattern due to an oblique angle of the sensor than for the prior art optical system. A more accurate analysis may thereby be obtained.

The system as described herein has no need for calibration before making the actual measurements in order to obtain reliable measurements. The pattern and the sensor are stable over time and thus there is no need for recalibration to obtain reliable measurements over time.

The system as described herein may be suitable for determining both small and large tensions. The same kind of sensor may be utilized both for small and large tensions. There is hence no need to adapt the sensor to the magnitude of the tension, which e.g. would have been the case for strain gauges.

The sensing element of the sensor may have a sensing area in the range of from 0.01 mm x 0.01 mm to 50 mm x 50 mm, preferably from 0.1 mm x 0.1 mm to 20 mm x 20 mm, more preferably from 0.5 mm x 0.5 mm to 15 mm x 15 mm. The sensing element may have a square or rectangular shape, but other shapes, e.g. circular, elliptic, rhombic, are possible as well.

The sensing element may have a planar geometry. This is suitable if the pattern is planar or substantially planar, which in turn is suitable if the object has a planar surface or a slightly curved surface. In that case the sensor is typically planar as well.

As an alternative, the sensing element may have a non-planar geometry, e.g. be curved, such as forming a part of an envelope surface of a cylinder or a sphere. This is suitable if the pattern is non-planar, e.g. located on a shaft. Preferably, the geometry of the sensing element is selected to fit to the topography of the surface of the object. In that case the sensor is typically non-planar as well.

As yet an alternative, the sensing element may be flexible, whereby the sensing element is adapted to conform to at least part of the topography of the surface of the object, e.g. by bending or curving the sensing element. In that case the whole sensor is typically flexible as well. The sensing element may e.g. be adapted to follow a perimeter of the object, e.g. a circumference of a shaft.

If the sensing element has a non-planar geometry, or is flexible and thus can be formed to a non-planar geometry, the sensing element may be adapted to follow at least 20%, preferably at least 30%, more preferably at least 40%, most preferably at least 50% of the perimeter of the object, e.g. of the circumference. In that case, the shape of the sensing area is typically elongated, e.g. rectangular, in order to be able to follow as much of the perimeter of the object as desired.

In an example not being within the scope of the claims, the system may comprise at least two near-object sensors as described herein. This may be useful when the object is a beam or a shaft, for which torque is to be determined, by means of the system described herein being used as a torque meter. The beam or shaft may e.g. be provided with two patterns located a distance between them. A respective sensor, optionally with a respective individual analysis device, is located at each pattern in order to determine the location of the pattern with respect to the other pattern. If the shaft or beam is subjected to a torque the two patterns will have an angular displacement with respect to each other. If the two sensors are synchronized in time it is possible to determine this angular displacement and deduce the torque in the shaft or beam. The at least two sensors may alternatively have a common analysis device.

In an alternative example for torque measurement, not being within the scope of the claims, one single sensor may be used if it is provided with a sensing element being large enough to accommodate both patterns. In another example not being within the scope of the claims, one sensor is used to acquire an image of one pattern. If the torque is large enough or the required sensitivity, resolution, and/or range of the sensor allows it, the pattern elements in the pattern will deflect from each other which is an indication of the torque.

The torque meter, not being within the scope of the claims, may be housed in a single housing and may comprise one or a plurality of sensors, optionally, an interface to communicate acquired values and, optionally, bearings to support the shaft or beam. The shaft or beam may be provided together with this torque meter or the shaft or beam may be supplied by the user himself. In case of the shaft being supplied with the torque meter, the shaft or beam may be provided with means for connecting, e.g. a splined coupling at one or both ends depending on application, to another shaft in order to fit with existing parts of an assembly wherein the torque meter finds applicability. However, the torque meter may also be mounted around an existing shaft application by sliding the torque meter onto the shaft provided with a suitable pattern.

In an application, for which it is of interest to measure torque, it may be advantageous to use more than one sensor depending on resolution required. Furthermore, the torque meter example, not being within the scope of the claims, may provide a solution which may give additional information about the system it measures: for instance position of the object, which torque is measured, or rotational speed of the object. With a plurality of sensors, the system may provide information about the translation of the shaft in x, y, and z directions with respect to the sensors. The plurality of sensors may be mounted with an angular difference from each other. The angular difference may be in a range from 0 to 360 degrees.

The present disclosure relates to a kit for determining tension of a non-living object by means of a macroscopic pattern located on the object. The kit comprises the system as described herein and the non-living object.

The above-mentioned prior art optical system typically has a maximum distance between the optical pattern on the object and the optical sensor of around 30 mm, e.g. in the range of from 15 to 45 mm.

The pattern may have a largest extension of at least 0.2 mm, preferably of at least 0.5 mm, more preferably of at least 1 mm, the largest extension being determined as the length of the longest straight line that could be drawn through the pattern.

The pattern typically covers a part of the object. Preferably, at least the part of the object being measurable by the sensor is provided with the pattern, such that the pattern has at least a size corresponding to that of the sensing element. The pattern may extend around, or substantially around, a perimeter of the object, e.g. around a shaft of the object. This is beneficial for a rotary object.

As described above, the pattern may comprise reference data, e.g. information about the pattern when in an un-distorted or distorted condition.

The pattern may extend in two or three dimensions. Extending in two dimensions correspond to an area. The third dimension could then correspond to a depth or height of the pattern elements. Purely as an example, a pattern comprising a plurality of dents and/or protrusions extends in three dimensions.

In principle, a one-dimensional pattern, such as a line, would be enough, although even a linear groove in reality has a width, which however is much less than the length of the groove. Further, even if such a pattern forms a straight line when the object is untensioned, the line will be deformed, i.e. not straight any more, when the object is tensioned.

The sensor of the system is attachable to, or attached to, the object. The sensor may then be positioned over the pattern by means of an attachment unit encompassing the object. A sealing, comprised in the attachment unit or sensor, or provided as a separate component, may ascertain that no dirt or other impurity ends up between the sensor and the pattern, thereby disturbing the data acquisition.

If the sensing element has a non-planar geometry, or is flexible and thus can be formed to a non-planar geometry, which is described above, the sensing element may be adapted to follow at least 20%, preferably at least 30%, more preferably at least 40%, most preferably at least 50% of the perimeter of the object, e.g. of the circumference of a shaft.

The present disclosure further relates to a use of a system as described herein or a kit as described herein for determining tension of the non-living object. The determining of the tension may comprise determining a translational and/or rotational displacement of the object, wherein the displacement is due to tension.

The present invention may be used in a number of specific applications, such as:
1. Measuring tension of screws/bolts, e.g. for determining the tension in the screws/bolts at different times and/or time intervals.
2. Measuring tension of bearings or bearing components, for instance in a bearing housing.
3. Measuring tension in parts of bridges, buildings, water dams, seals, rails of railways, wind mill towers, wind mill wings, pipe flanges, heat exchangers or parts of vehicles.
4. Measuring tension in fastening elements or load cells in applications such as large cranes.
5. Measuring tension in test rigs used in laboratory environments, e.g. in experiments for determining the tensile strength of materials.
6. Measuring tension in cables, rods, wires, ropes, belts or straps or related lashings, turnbuckles or anchors.
7. Measuring tension, optionally including torsion, in a rotating shaft.
8. Measuring tension, optionally including torsion, in a steering wheel shaft, for use in an electrical power steering application.
9. Measuring tension in a joystick, which may be interesting if comparing displacement applied to the joystick, e.g. at its head, with actual displacement, considering the mechanical properties of the joystick, e.g. how a shaft of the joystick reacts to tension, such as a torsional force.
10. Measuring tension in a bolt tensioner or a torque wrench.
etc.

The fastening of a screw/bolt into a receiving object may be done by either turning the screw using a torque, e.g. using a wrench, or using a bolt tensioner as understood by the person skilled in the art. A bolt tensioner operates by applying a drag force to the bolt when it has been fastened finger-tight to the receiving object with a washer in between the bolt head and the receiving object. When the drag force is applied the bolt is stretched and the washer is loosened slightly. By fastening the washer, which is threaded on the inside, and which thread fits to the thread of the screw, onto the receiving object by screwing it towards the receiving object and thereafter releasing the drag force, a pre-tension of the fastening arrangement is provided. It should be noted that the washer need not be threaded but can be applied during applying the drag force; the washer then needs to have an open portion in order to be pushed in under the screw head. Usually, the bolt in the bolt tensioner application comprises a pin bolt arrangement with a nut being tightened to the washer; however, other solutions may be used where a washer may be utilized.

The present invention is suitable for use in applications with dynamic forces, e.g. vibration. Such forces may e.g. occur in a wind mill.

The present disclosure also relates to a method according to claim 12 for determining tension of a non-living object by means of a macroscopic pattern located on the object. The method comprises:
- Acquiring data by means of a near-object sensor comprising an array of measurement values of the pattern, the array having at least two dimensions.
- Sending the data directly or indirectly from the sensor to an analysis device.
- Analysing the data to determine the tension of the object.

The method is preferably performed by means of a system as described herein.

The method may further comprise:
- Providing the non-living object with a macroscopic pattern in a position where applied forces will result in a tension.

The method may also comprise:
- Subjecting the object to tension.

One or more of the steps may be repeated. The tension may be determined continuously or intermittently in a tension monitoring system, e.g. when monitoring a rotating shaft.

### BRIEF DESCRIPTION OF THE DRAWINGS

The present invention will hereinafter be further explained by means of non-limiting examples with reference to the appended drawings wherein:
- Fig. 1: illustrates a non-living object provided with a pattern.
- Fig. 2: illustrates a system according to a first embodiment of the invention.
- Fig. 3: illustrates a sensing element of the system.
- Fig. 4: illustrates a system according to a second embodiment of the invention.
- Fig. 5a: illustrates a system according to a third embodiment of the invention.
- Fig. 5b: illustrates a system according to a fourth embodiment of the invention.
- Fig. 5c: illustrates a system according to a fifth embodiment of the invention.
- Fig. 6: illustrates a system according to a sixth embodiment of the invention.
- Fig. 7a: illustrates a torque meter example, not being within the scope of the claims.
- Fig. 7b: illustrates a side view of a variant of the torque meter.
- Fig. 8: illustrates a method according to the invention.
- Fig. 9: illustrates an analysis device of the system.
- Fig. 10: illustrates a kit according to the invention with an object having an attached sensor.
- Fig. 11: illustrates a system according to the invention with the sensor adapted to follow the topography of the object.
- Fig. 12: illustrates a variant of the system of Figure 2.

It should be noted that the appended drawings are schematic and that individual components are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment.

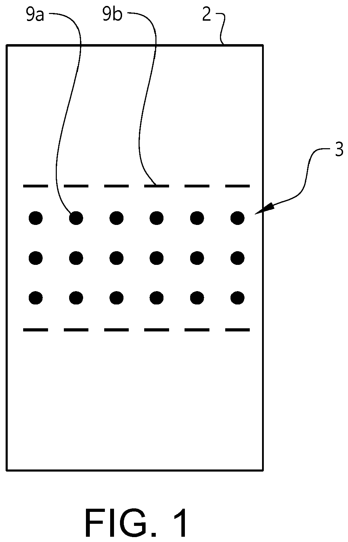

Figure 1 illustrates a non-living object 2, for which a system and/or a method according to the present invention for determining tension are suitable to be used. The tension of the non-living object 2 is determined by means of a macroscopic pattern 3 located on the object 2. The pattern 3 is provided on the object 2, typically on its surface. The pattern 3 may also be protected by a protective coating. The pattern 3 comprises a plurality of pattern elements, e.g. a plurality of dents 9a, 9b. The pattern 3 may e.g. comprise circular elements 9a and elongated elements, such as line segments 9b. The pattern 3 is regular, since the pattern element 9a, 9b is repeated and located a predefined distance relative to its neighbours. An exemplary tension may be induced in the object 2, e.g. by applying an external force.

A few examples of applications of the invention will be described below.

In a first application, tension is determined with respect to an object subjected to a static or semi-static tension applied through some forces in the system leading to a tension in the material. For instance, a bolt and nut used for holding another object is subjected to a tension when the nut has been put into operation. This tension is determinable on the nut, the bolt head, or on a separate washer inserted between the nut/bolt head and the other object. It should be appreciated that the nut may be dispensed with if the threads of the bolt fit into a threaded receiving portion located on a fixed object to which the other object is to be fixated to.

Purely as an example, assume a wheel to be fastened to a vehicle. The wheel is often fastened using a plurality of bolts put into receiving holes in the wheel from one side of the wheel and on the other side of the wheel there are located a plurality of receiving structures, which are threaded so as to lock the bolts when they are screwed into these receiving structures. A washer may be located between the bolt and the wheel and tension induced in the tightening operation will be transferred to the washer also. A testing device may be used for checking a current status of the tension in order to ascertain the user of the vehicle that each bolt holding the wheels is suitably tightly fitted.

Another example, where such a solution is of interest, is fastening of a cylinder head of a motor where it is of interest to obtain a uniform and symmetrical fastening of the cylinder head against the engine block.

There are some areas of technology where it is imperative that each bolt holding a structure is tightly mounted and that the bolts keep a certain amount of tightness, i.e. a certain level of tension in the fixation structure. These areas of technology involve pressure vessels, large bearings located for instance in relation to oil rigs in the oil industry, large crane structures at building sites, and so on where complex accidents may occur if one or several bolts are faulty. For example in the oil industry, there are insurance demands on checking the operation of each bolt in bearing structures. Similarly this is true for pressure vessels within the nuclear energy production industry. Therefore there is an interest in having a quick and reliable means for measuring tension in objects such as bolts.

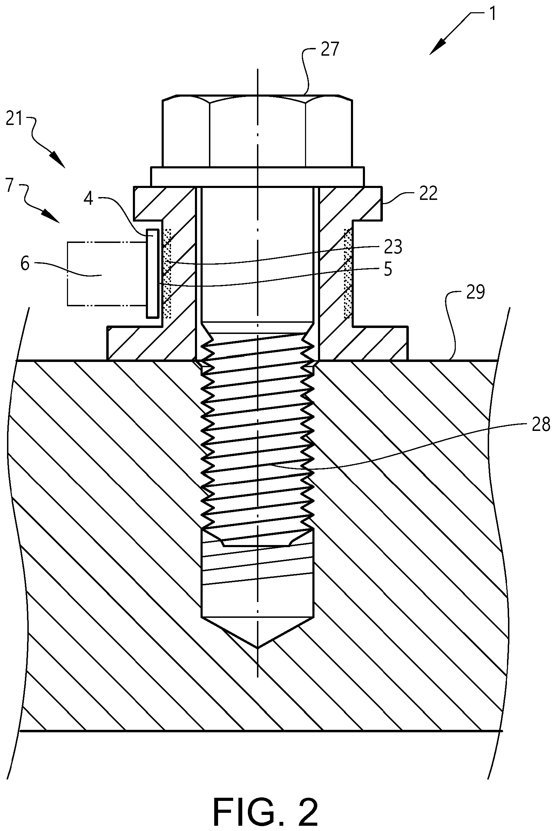

Figure 2 illustrates a cross-sectional view of a system 1 according to the invention for determining tension of a non-living object and a screw/bolt 27 with a threaded portion 28 that fits into a threaded portion in a receiving second object 29, the second object 29 being an object to which the screw/bolt 27 is to be fastened to. A washer 22, being the non-living object of this application and for which the tension is to be determined, comprises a pattern 23, e.g. like the pattern 3 of Figure 1. The washer 22 is fitted between the head of the screw/bolt 27 and the second object 29. The screw/bolt 27 and the second object 29, taken together, may be seen as a fastening arrangement 21. The system 1 comprises a sensor 4 for acquiring data of the pattern 23 and an analysis device 6. The non-living object, i.e. the washer 22 with pattern 23, and the system 1, with the sensor 4 and the analysis device 6, may be seen as parts of a kit for determining tension.

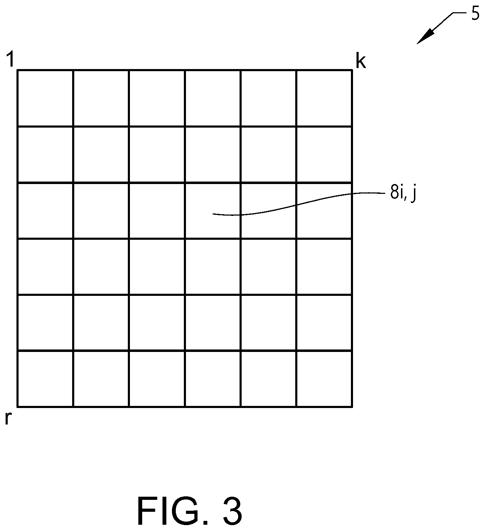

The sensor 4 comprises a sensing element 5. The sensing element 5 measures the pattern 3 in order to acquire data comprising an array of measurement values, whereby the array has at least two dimensions. Each element of the array may correspond to a sensor sub-unit 8_{i,j}, wherein i is an integer going from 1 to the number r of rows in the sensing element 5 and j is an integer going from 1 to the number k of columns in the sensing element 5, see Figure 3. Typically, a pattern element 9a, 9b, see Figure 1, is covered by a plurality of sensor subunits 8i,j.

The sensor 4 sends a signal relating to the acquired data of the pattern 3 to the analysis device 6, e.g. a processor, for analysis. The analysis device 6 may be incorporated in a common encapsulation, i.e. a housing 7, together with the sensor 4, as indicated by dashed-dotted lines in the illustrated embodiment, or they may be two separate units that are wiredly or wirelessly connected to each other. The analysis device 6 is arranged to receive the data from the sensor 4 and to analyse the data for determining the tension of the object 22.

The data analysis may include making a representation of the data. Preferably, the representation of the data has at least two dimensions. The data may be represented as an array of grey levels, e.g. from 0 to 255. Such data is easy to visualize as a grey-level image. As an alternative, the data may be visualized as a colour image. In those cases, the grey level or the colour may represent the depth or height of the pattern. Each pixel of the image may correspond to a local position within the pattern and the grey level/ colour of that pixel may correspond to the depth or height of the pattern in that local position as detected by the sensor subunit.

The data analysis may further include methods commonly utilized within image analysis. The analysis of the data may e.g. include comparing the determined pattern 3 with a reference corresponding to the object 2 in an untensioned condition.

In case the pattern 3 comprises a plurality of pattern elements, e.g. a plurality of dents 9a, 9b, as in the pattern 3 of Figure 1, the acquired matrix may be represented as a grey level image, wherein the grey level corresponds to the depth. The analysis device 6 may in that case determine the location of each individual pattern element 9a, 9b using methods commonly used within image analysis, e.g. a centroid algorithm or an algorithm determining the geometrical centre of the pattern element 9a, 9b. From this analysis it is possible to determine the location of the pattern element 9a, 9b on the object 2. If the pattern 3 is uniquely coded, also the object 2 may be identified. It may then be possible to derive a position of the pattern element 9a with respect to other pattern elements. If knowing the untensioned position of the pattern elements 9a, 9b, it is possible to determine the tension induced in the object between the pattern elements 9a, 9b.

When the screw/bolt 27 is fastened to the second object 29, a tension is induced in the screw/bolt 27 and the washer 22. This tension leads to a change of geometrical dimensions of the washer 22, which in turn will affect the relative position of the pattern elements, cf. dents 9a, 9b as illustrated in Figure 1. Inter alia, the distance between centres of the dents 9a, 9b, will change. This distance change may be analysed using any of the methods described herein and thus the applied tension may be determined.

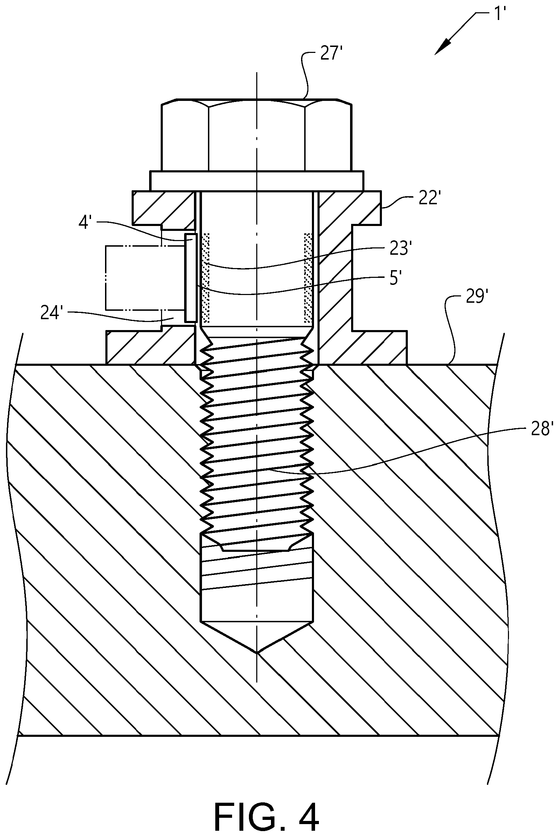

Figure 4 illustrates a system 1' according to a second embodiment of the invention, wherein the washer 22' comprises an aperture 24'. The sensor 4' is positioned such that the sensing element 5' is aligned with the aperture 24'. In this embodiment, the object is the screw/bolt 27' and the pattern 23' is located on an unthreaded portion of the screw/ bolt 27'. The pattern 23' is at least located at a portion of the screw/bolt 27' facing the aperture 24', but preferably the pattern 23' goes all around the perimeter of the screw/bolt 27'. As an alternative or a complement, the threads of screw/bolt 27' may be used as a pattern for the tension measurement, presuming that the threads are determinable by the sensor. In that case, no extra pattern would have to be applied for the purpose of tension measurement. It is also feasible that the washer 22' comprises two, three, four or more apertures 24'.

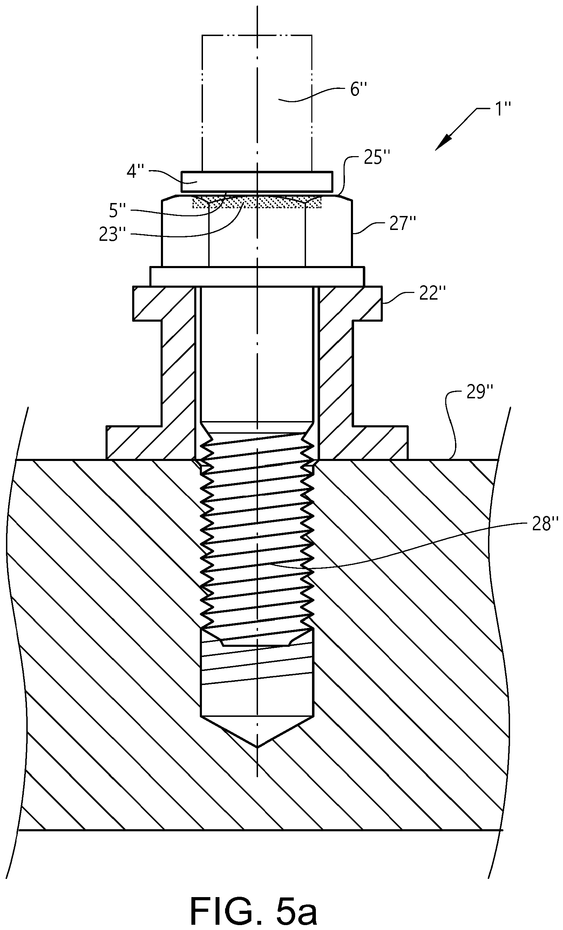

Figure 5a illustrates a system 1" according to a third embodiment of the invention, wherein the sensor 4" is positioned such that the sensor 4" is located at a head of the screw/bolt 27". Also in this embodiment, the object is the screw/bolt 27". The washer 22" is optional. The pattern 23" is located on a top surface 25" on top of the screw/bolt 27". The other details are corresponding to those of Figures 2 and 4.

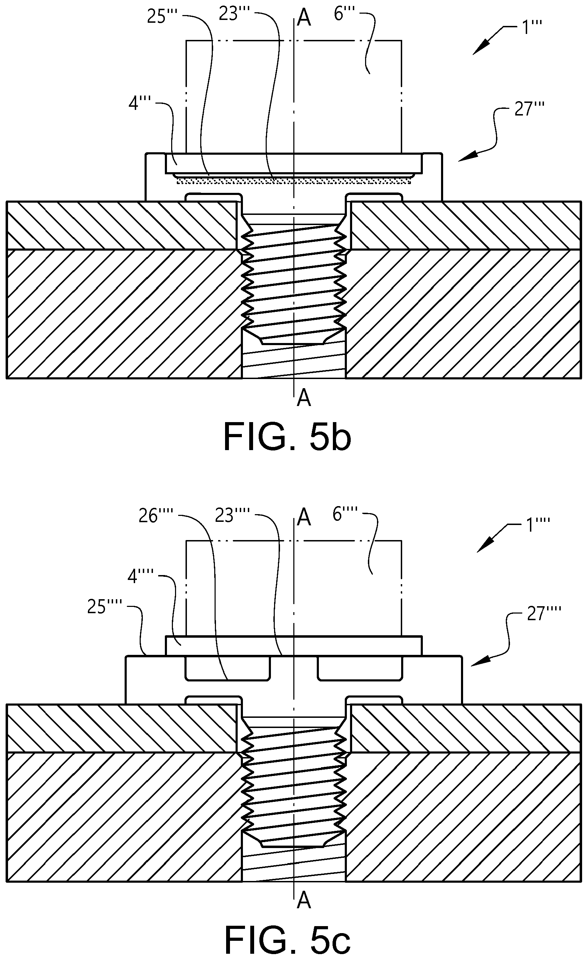

Figure 5b illustrates a system 1''' according to a fourth embodiment of the invention, wherein the sensor 4'" is positioned such that the sensor 4'" is located at a depression 25''' in the head of the screw/bolt 27'''. The object, the tension of which is to be determined, is thus the screw/bolt 27'''. In this embodiment, there is no washer. The analysis device 6'" may be incorporated in a common encapsulation together with the sensor 4''', as is indicated by dashed-dotted lines, or they may be two separate units wiredly or wirelessly connected to each other. The pattern 23''' is located on a surface of the depression 25''' in the head of the screw/bolt 27'''. The sensor 4'" is utilized to determine a deflection of the surface of the depression 25'''. Preferably, the pattern 23''' is centred in relation to a longitudinal axis A-A of the screw/ bolt 27'''. When data is acquired by means of the sensor 4''', it is possible to both determine displacement of the pattern elements in relation to the axis A-A, as well as the depth of the pattern elements. Thereby the deflection of the surface of the depression 25''' may be calculated and consequently the tension of the screw/bolt 27''' may be determined. This system 1''' is e.g. suitable for small tensions. The depression 25''' may be protected by a cover, e.g. made of plastics, which is transparent for the properties sensed by the sensor 4'''.

Figure 5c illustrates a system 1"" according to a fifth embodiment of the invention, wherein the sensor 4'''' is positioned such that the sensor 4'''' is located at a head of the screw/bolt 27''''. The object, the tension of which is to be determined is the screw/bolt 27"". Similar as for the embodiment of Figure 5b, there is no washer. The pattern comprises a pin 23"", which preferably is located centred in relation to a longitudinal axis A-A of the screw/bolt 27''''. The pin 23"" is surrounded by a depression 26''''. The head of the screw/bolt 27"" also comprises an outer portion 25"". When the screw/bolt 27''' is untensioned, the surface of the outer portion 25"" is at the same level as the surface of the pin 23''''. However, when the screw/bolt 27''' is tensioned, the level of the pin 23"" in relation to the level of the surface of the outer portion 25"" will differ. This difference may be measured by means of the sensor 4'''' and used to determine the tension. Similar as for the embodiment of Figure 5b, the depression 25''' may be protected by a cover, e.g. made of plastics, which is transparent for the properties sensed by the sensor 4"".

It should be noted that in other embodiments of the present invention, the washer may be incorporated into the head of the screw/bolt in a suitable manner as long as the forces applied during tensioning are transferred through the washer part of the head of the screw/bolt.

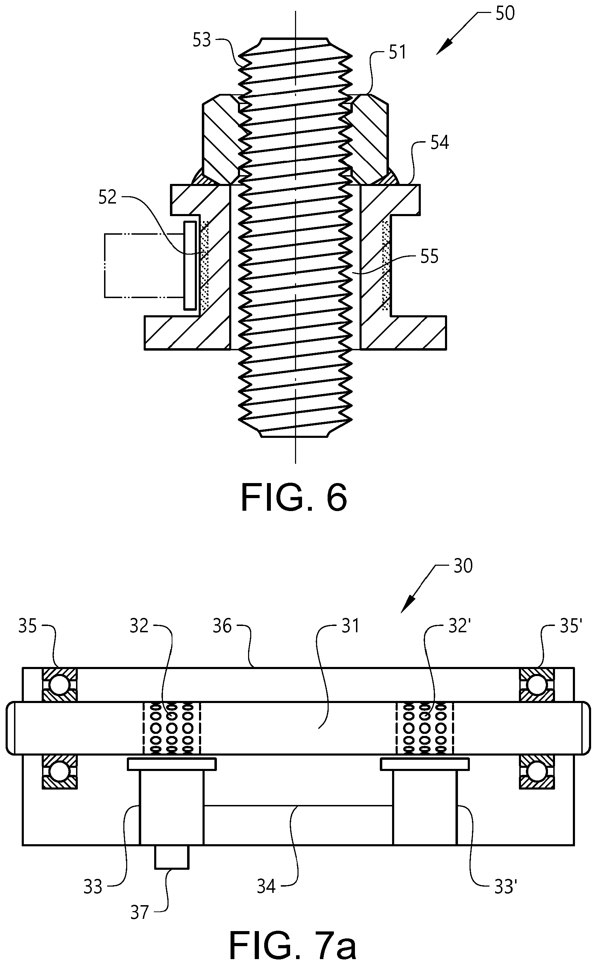

Figure 6 illustrates a sixth embodiment of the invention, wherein the nut and washer form a common component 50, e.g. by being welded together or by being formed as an integral unit. The component 50 is attached to a threaded shaft 53. The component 50 comprises a nut portion 51 for receiving a tightening tool and a washer portion 54 provided with a pattern 52. In the illustrated embodiment, only the nut portion 51 is provided with threads. The washer portion 54 is unthreaded. Instead there is a gap 55 between the washer portion 54 and the shaft 53. The tension is transferred through the washer portion 54 and thus the tension may be detected using the pattern 52.

For these types of applications with a washer, a screw/bolt or the common component, the present invention is advantageously applicable for dimensions relating to M10 or larger systems, e.g. M16 and M20 and so on. However, the invention is not limited to this range: it may also be applicable to smaller dimensions. Furthermore, the present invention is not limited to metric configurations, but is applicable to any system. The reference to metric M20 is only for illustrating an example of dimension.

The sensor 4 may be provided permanently together with the washer or it may be provided as a field module to be used intermittently on field inspections of tension in the object 2, e.g. the fastening arrangement 21 of Figure 2. For instance, an inspecting user may be equipped with a probe, comprising the system 1 with the sensor 4 and the analysis device 6, and a display unit for displaying a detected tension value, which the user beings along on inspection tours to equipment that is of need to be inspected.

The system 1 may be attached to the object 2 by means of a fixture, not illustrated, located in relation to the pattern 3 such as to provide a rigid receiving fixture and allow for high reproducibility between measurements when the system 1 is removed and later put back again.

The pattern 3 itself may be used as a reference for determining the distance between the sensing element 5 and the pattern 3 by using the fact that the induced tension operates in a certain direction mainly and affects the distance between pattern elements mainly in one direction and leaves the distances between pattern elements in another direction more or less unaffected or by analysing the relationship between the pattern elements. Thus by determining the distance between the pattern elements in an unaffected direction it is possible to deduce the distance to the pattern from the sensing element 5, since the distance between the pattern elements when the pattern is untensioned is known.

The pattern 3 may be formed with a known distance between the pattern elements 9a, 9b and then it is not necessary to store information of a reference for the purpose of determining the tension.

In order to further improve the sensitivity and resolution of the sensor 4, a temperature sensor may be used in order to handle temperature effects on the system and the object.

Further, one may measure on several locations around the perimeter of the washer and average the measurements in order to handle any imbalance problems of the washer in relation to the screw/object. Measurements on several locations may also provide information about the tension around the perimeter to determine if any specific part of the washer/screw is broken in any way.

The object, such as the washer, is preferably made of a material with mechanical properties suitable for the range of tensions that will be induced and with long term stability properties in order to be used for a suitable time. Metallic or alloy material of suitable dimension may be utilized, for instance stainless steel, aluminium, iron, copper, brass, titanium, and so on. The washer may be provided with an oxidation reducing coating or some other suitable physical protection. The object may also comprise or be constituted by polymeric material, such as rubber or plastics.

The pattern 3 may be provided by directly incorporating it with the object through printing, laser gravure, mechanical gravure, etching, boring, milling, turning, sputtering or electrical discharge machining, or the pattern may be provided on a separate film fitted to the object, e.g. as a printed pattern on a plastic of metallic film which is glued to the object.

It is also possible to measure torque on the washer or screw by measuring angular distortion of the pattern.

The pattern may optionally be provided on a side of the screw head in a position close to the object where there under certain conditions may be induced tension.

Figure 7a illustrates schematically an example of an application for torque measurements, a torque meter 30, not being within the scope of the claims. A shaft 31 has two patterns 32, 32' located a distance between them. A respective sensor 33, 33', optionally with a respective analysis device, is located at each pattern in order to determine the location of the pattern with respect to the other pattern. If the shaft 31 is subjected to a torque, i.e. a kind of tension, the two patterns 32, 32' will have an angular displacement with respect to each other. If the two sensor 33, 33' are synchronized in time it is possible to determine this angular displacement and deduce the torque in the shaft 31.

The torque meter 30 may be housed in a single housing 36, as is illustrated, and may comprise one or a plurality of sensors 33, 33', an interface 37 to communicate acquired values and bearings 35, 35' to support the shaft 31. The analysis device may be included in the torque meter 30, not illustrated, e.g. as a common unit for the sensors 33, 33'.

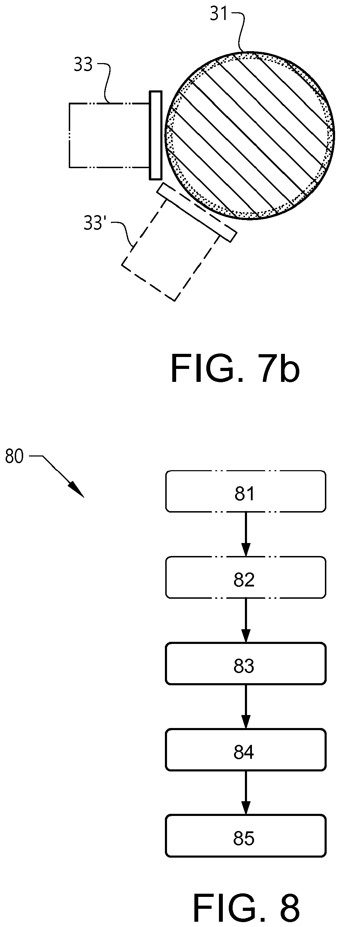

With a plurality of sensors, the system 30 may provide information about the translation of the shaft in x, y, and z directions with respect to the sensors. The plurality of sensors are preferably mounted with an angular difference from each other as seen in Figure 7b, wherein the sensors 33, 33' are mounted with approximately 45 degrees difference around the shaft 31. The angular difference may be in a range from 0 to 360 degrees.

Figure 8 illustrates a method 80 for determining tension of a non-living object by means of a macroscopic pattern located on the object. The method comprises
83: Acquiring data by means of a near-object sensor comprising an array of measurement values of the pattern, the array having at least two dimensions.
84: Sending the data directly or indirectly from the sensor to an analysis device.
85: Analysing the data to determine the tension of the object.

The method is preferably performed by means of a system as described herein.

The method may further comprise:
81: Providing the non-living object with a macroscopic pattern in a position where applied forces will result in a tension.

The method may also comprise:
82: Subjecting the object to tension.

One or more of steps 82-85 may be repeated. The tension may be determined continuously or intermittently in a tension monitoring system as described herein, e.g. monitoring a rotating shaft.

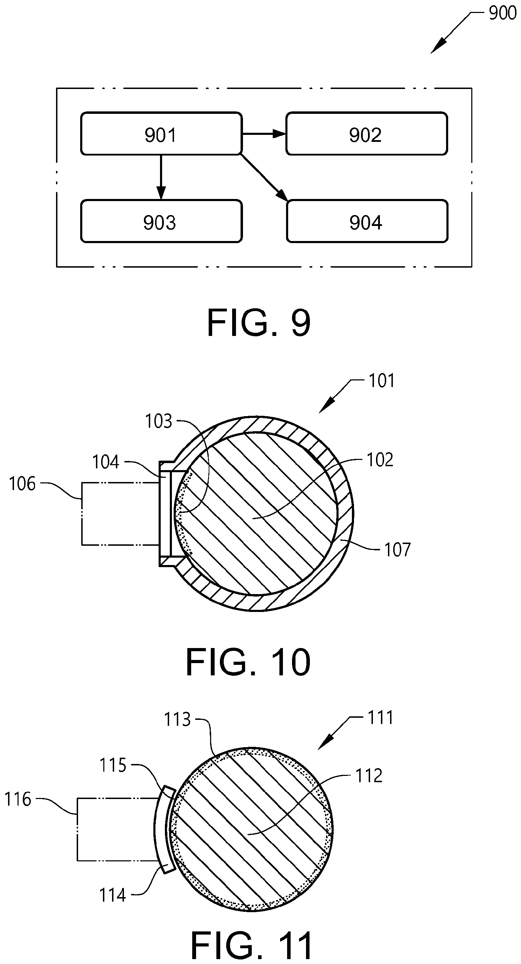

Step 85 is preferably performed by software in an analysis device such as a microprocessor, FPGA (Field Programmable Gate Array), ASIC (Application Specific Integrated Circuit), computer, tablet, smartphone, or similar device, which preferably is mobile. Figure 9 shows an example of such an analysis device 900 with a processor 901 and memory 902 for storing software, results, and/or intermediate values.

The analysis device 900 may comprise a sensor interface 903 and a communication interface 904. The sensor interface 903 is arranged to communicate with the sensor and may also be arranged to receive signals from other sensors of interest to acquire data from. These other sensors may for instance include temperature, humidity, magnetic and/or electrical field, velocity, rotational speed, or similarly. The communication interface may be arranged to be in contact with other devices through a communication protocol in order to exchange data and control signals. The user may communicate with the analysis device 900 from a computer for instance in order to acquire a reading from the analysis device 900 and to set up the analysis device 900 for measurement; setting measurement ranges, sensitivity, timing characteristics, and so on as understood by the skilled person. The analysis device 900 may be a separate device specifically arranged for the purpose of use in applications according to the present invention, or it may be part of some other device such as a computer, tablet, smartphone, or similar device, which preferably is mobile.

The analysis device 900 may also comprise a direct user interface setup using a user interface located on the device, e.g. a touch panel connected to the analysis device or buttons, keyboard and/or other similar mechanical interface devices as understood by the skilled person.

The analysis device 900 may also be arranged to communicate with a centrally located server in order to upload data and/or receive calibration data for the object under measurement.

Figure 10 illustrates a kit according to the invention with a system 101 and an object 102, which may be a shaft or a washer with a pattern 103 on the surface. In this embodiment, the sensor 104, and optionally the analysis device 106, is/are attached to the object 102, such that at least the sensor 104 can follow the object 102 when moving. The sensor 104 is positioned over the pattern 103 by means of an attachment unit 107 encompassing the object 102.

Figure 11 illustrates another embodiment of a system 111 according to the invention with a sensor 114 adapted to follow the topography of the object 112, e.g. a rotatable shaft. The object 112 is provided with a pattern 113, which preferably extends around the circumference of the object 112. The sensing element 115 of the sensor 114 is curved, such that it is adapted to follow the topography of the object 112. The sensing element 115 may e.g. have a radius of curvature corresponding to the sum of the radius of curvature of the object 112 plus the interspace between the object 112 and the sensing element 115.

According to another embodiment of the invention, not illustrated, the sensing element may be flexible. The sensing element may be made to conform to at least part of the topography of the surface of the object, e.g. by bending or curving the sensing element. The sensing element may for example follow a perimeter of the object, e.g. a shaft in a similar way as depicted in Figure 11. In that case, the analysis device may be a separate component, which may be wiredly or wirelessly connected to the sensor.

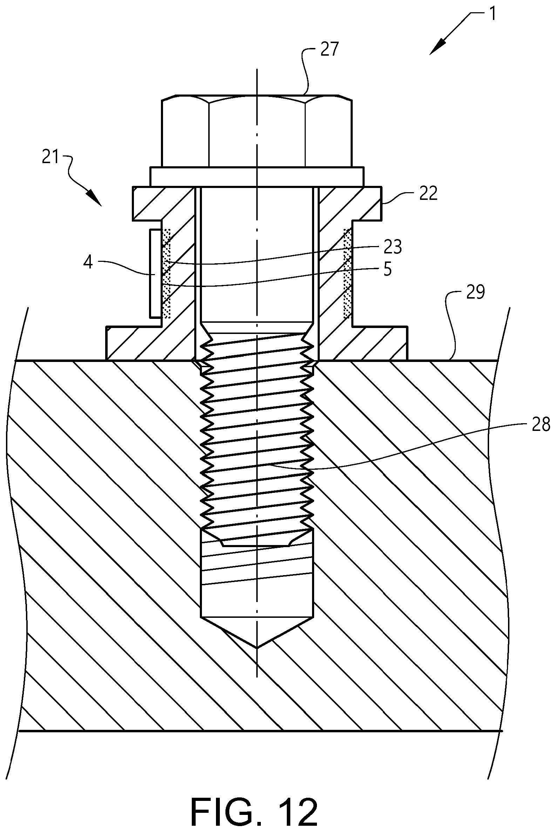

Figure 12 illustrates a variant of the system 1 of Figure 2. In this variant, the analysis device, not illustrated, is a separate unit, which is wiredly or wirelessly connected to the sensor 4. The sensing element 5 is in contact with the object, i.e. the washer 22. For this kind of embodiment, it is preferred to have a thin sensor 4 and/or at least a thin sensing element 5, with thin meaning a thickness of less than 3 mm, preferably less than 1 mm or preferably less than 0.5 mm. Further, it is preferred that the sensor 4 is curved or flexible, such that it can adapt to the topography of the surface of the object. The other details of this variant are corresponding to those already described in conjunction with Figure 2.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, and that several "means", "units" or "devices" may be represented by the same item of hardware, and that at least part of the invention may be implemented in either hardware or software.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A kit for determining tension of a non-living object (2, 22), said kit comprising
- a non-living object (2, 22), a macroscopic pattern (3, 23) being located on said object (2, 22), said pattern being used for determining tension,
- a sensor (4) comprising a sensing element (5) arranged to acquire data comprising an array of measurement values of said pattern (3, 23), said array having at least two dimensions,
- an analysis device (6) arranged to receive said data from said sensor (4) and to analyse said data for determining said tension of said object (2, 22),
**characterized in that**
said sensor (4) is a contact sensor adapted to operate in direct contact with said object (2, 22), such that said sensing element (5) is in contact with said object (2, 22),
said sensor is attached to or attachable to said object (2, 22), such that said sensing element (5) at least partly covers said pattern (3, 23), and
said sensor (4) is a piezo-electric sensor, wherein said sensing element (5) comprises an array of sensor subunits (8_{i,j}),
wherein said pattern (3, 23) comprises pattern elements having a predefined depth and/or height.

2. The kit according to claim 1, said sensing element (5) comprising at least 10x10 sensor subunits (8_{i,j}).

3. The kit according to any one of the preceding claims, wherein said sensing element (5) has a resolution of at least 2 sensor subunits (8_{i,j}) per mm, preferably at least 4 sensor subunits (8_{i,j}) per mm, more preferably at least 10 sensor subunits (8_{i,j}) per millimetre.

4. The kit according to any one of the preceding claims, wherein said sensing element (5) has a planar geometry.

5. The kit according to any one of claims 1-3, wherein said sensing element (115) has a non-planar geometry, such as a part of an envelope surface of a cylinder or a sphere.

6. The kit according to any one of the preceding claims, wherein said sensing element is flexible, whereby it is adapted to conform to at least part of the topography of a surface of said object e.g. around a shaft of said object.

7. The kit according to any one of the preceding claims, wherein said pattern (32, 32', 113) extends around, or substantially around, a perimeter of said object (31, 112), e.g. around a shaft of said object.

8. The kit according to any one of the preceding claims, wherein said sensing element (115) of said sensor (114) is adapted to follow at least 20%, preferably at least 30%, more preferably at least 40%, most preferably at least 50% of said perimeter of said object (112).

9. The kit according to any one of the preceding claims, wherein said sensor (4) is configured for wireless connection.

10. The kit according to any one of the preceding claims, wherein said pattern on said object (2, 22) comprises reference data.

11. The kit according to any one of the preceding claims, wherein said pattern (3, 23) comprises a code being unique for said object (2, 22), on which said pattern (3, 23) is located.

12. A method (80) for determining tension of a non-living object (2, 22) by means of a macroscopic pattern (3, 23) located on said object (2, 22), said method comprising
- acquiring data by means of a sensor (4), said sensor (4) comprising a sensing element (5) arranged to acquire data comprising an array of measurement values of said pattern (3, 23), said array having at least two dimensions,
- sending said data directly or indirectly from said sensor (4) to an analysis device (6),
- analysing said data to determine said tension of said object (2, 22),
wherein said sensor (4) is a piezo-electric sensor, said sensor (4) being a contact sensor adapted to operate in direct contact with said object (2, 22), such that said sensing element (5) is in contact with said object (2, 22), wherein said sensing element (5) comprises an array of sensor subunits (8_{i,j}), and wherein said pattern (3, 23) comprises pattern elements having a predefined depth and/or height.

13. The method according to claim 12, wherein said pattern on said object (2, 22) comprises reference data, which is used for determining said tension of said object (2, 22).

14. The method according to claim 12 or 13, wherein said pattern (3, 23) comprises a code being unique for said object (2, 22), on which said pattern (3, 23) is located, said method further comprising:
- reading said code by means of an encryption key, e.g. provided as an algorithm in said analysis device (6), thereby getting to know an identity of said object (2, 22).

## Patentansprüche

1. Kit zum Bestimmen von Spannung eines nicht lebenden Objekts (2, 22), wobei das Kit Folgendes umfasst:
- ein nicht lebendes Objekt (2, 22), wobei sich ein makroskopisches Muster (3, 23) auf dem Objekt (2, 22) befindet, wobei das Muster zum Bestimmen von Spannung verwendet wird,
- einen Sensor (4), der ein Sensorelement (5) umfasst, das angeordnet ist, um Daten zu erfassen, die ein Array von Messwerten des Musters (3, 23) umfassen, wobei das Array wenigstens zwei Dimensionen aufweist,
- eine Analysevorrichtung (6), die angeordnet ist, um die Daten von dem Sensor (4) zu empfangen und die Daten zum Bestimmen von Spannung des Objekts (2, 22) zu analysieren,
**dadurch gekennzeichnet, dass**
der Sensor (4) ein Berührungssensor ist, der angepasst ist, um in direkter Berührung mit dem Objekt (2, 22) derart betrieben zu werden, dass das Sensorelement (5) mit dem Objekt (2, 22) in Berührung steht,
der Sensor an dem Objekt (2, 22) derart befestigt ist oder an diesem befestigt werden kann, dass das Sensorelement (5) das Muster (3, 23) wenigstens teilweise bedeckt, und
wobei der Sensor (4) ein piezoelektrischer Sensor ist, wobei das Sensorelement (5) ein Array von Sensoruntereinheiten (8_{i,j}) umfasst,
wobei das Muster (3, 23) Musterelemente umfasst, die eine vordefinierte Tiefe und/oder Höhe aufweisen.

2. Kit nach Anspruch 1, wobei das Sensorelement (5) wenigstens 10×10 Sensoruntereinheiten (8_{i,j}) umfasst.

3. Kit nach einem der vorhergehenden Ansprüche, wobei das Sensorelement (5) eine Auflösung von wenigstens 2 Sensoruntereinheiten (8_{i,j}) pro mm, bevorzugt wenigstens 4 Sensoruntereinheiten (8_{i,j}) pro mm, stärker bevorzugt wenigstens 10 Sensoruntereinheiten (8_{i,j}) pro Millimeter aufweist.

4. Kit nach einem der vorhergehenden Ansprüche, wobei das Sensorelement (5) eine planare Geometrie aufweist.

5. Kit nach einem der Ansprüche 1-3, wobei das Sensorelement (115) eine nicht planare Geometrie aufweist, wie etwa einen Teil einer Hülloberfläche eines Zylinders oder einer Kugel.

6. Kit nach einem der vorhergehenden Ansprüche, wobei das Sensorelement flexibel ist, wodurch es angepasst ist, wenigstens mit einem Teil der Topographie einer Oberfläche des Objekts, z. B. um einen Schaft des Objekts herum, übereinzustimmen.

7. Kit nach einem der vorhergehenden Ansprüche, wobei sich das Muster (32, 32', 113) um oder im Wesentlichen um einen Umfang des Objekts (31, 112) herum, z.B. um einen Schaft des Objekts herum, erstreckt.

8. Kit nach einem der vorhergehenden Ansprüche, wobei das Sensorelement (115) des Sensors (114) angepasst ist, um wenigstens 20 %, bevorzugt wenigstens 30 %, stärker bevorzugt wenigstens 40 %, am stärksten bevorzugt wenigstens 50 % des Umfangs des Objekts (112) zu folgen.

9. Kit nach einem der vorhergehenden Ansprüche, wobei der Sensor (4) für eine drahtlose Verbindung konfiguriert ist.

10. Kit nach einem der vorhergehenden Ansprüche, wobei das Muster auf dem Objekt (2, 22) Referenzdaten umfasst.

11. Kit nach einem der vorhergehenden Ansprüche, wobei das Muster (3, 23) einen Code umfasst, der für das Objekt (2, 22), auf dem sich das Muster (3, 23) befindet, eindeutig ist.

12. Verfahren (80) zum Bestimmen von Spannung eines nicht lebenden Objekts (2, 22) mittels eines makroskopischen Musters (3, 23), das sich auf dem Objekt (2, 22) befindet, wobei das Verfahren Folgendes umfasst:
- Erfassen von Daten mittels eines Sensors (4), wobei der Sensor (4) ein Sensorelement (5) umfasst, das angeordnet ist, um Daten zu erfassen, die ein Array von Messwerten des Musters (3, 23) umfassen, wobei das Array wenigstens zwei Dimensionen aufweist,
- Senden der Daten direkt oder indirekt von dem Sensor (4) an eine Analysevorrichtung (6),
- Analysieren der Daten, um die Spannung des Objekts (2, 22) zu bestimmen, wobei der Sensor (4) ein piezoelektrischer Sensor ist, wobei der Sensor (4) ein Berührungssensor ist, der angepasst ist, um in direkter Berührung mit dem Objekt (2, 22) derart betrieben zu werden, dass das Sensorelement (5) mit dem Objekt (2, 22) in Berührung steht, wobei das Sensorelement (5) ein Array von Sensoruntereinheiten (8_{i,j}) umfasst, und wobei das Muster (3, 23) Musterelemente umfasst, die eine vordefinierte Tiefe und/oder Höhe aufweisen.

13. Verfahren nach Anspruch 12, wobei das Muster auf dem Objekt (2, 22) Referenzdaten umfasst, die zum Bestimmen der Spannung des Objekts (2, 22) verwendet werden.

14. Verfahren nach Anspruch 12 oder 13, wobei das Muster (3, 23) einen Code umfasst, der für das Objekt (2, 22), auf dem sich das Muster (3, 23) befindet, eindeutig ist, wobei das Verfahren ferner Folgendes umfasst:
- Lesen des Codes mittels eines Verschlüsselungsschlüssels, der z. B. als Algorithmus in der Analysevorrichtung (6) bereitgestellt wird, wobei dadurch eine Identität des Objekts (2, 22) ermittelt wird.

## Revendications

1. Kit permettant de déterminer la tension d'un objet non vivant (2, 22), ledit kit comprenant
- un objet non vivant (2, 22), un motif macroscopique (3, 23) étant situé sur ledit objet (2, 22), ledit motif étant utilisé pour déterminer la tension,
- un capteur (4) comprenant un élément de détection (5) agencé pour acquérir des données comprenant un réseau de valeurs de mesures dudit motif (3, 23), ledit réseau ayant au moins deux dimensions,
- un dispositif d'analyse (6) agencé pour recevoir lesdites données dudit capteur (4) et pour analyser lesdites données pour déterminer ladite tension dudit objet (2, 22),
**caractérisé en ce que**
ledit capteur (4) est un capteur à contact adapté pour fonctionner en contact direct avec ledit objet (2, 22), de telle sorte que ledit élément de détection (5) est en contact avec ledit objet (2, 22),
ledit capteur est fixé ou peut être fixé audit objet (2, 22), de telle sorte que ledit élément de détection (5) recouvre au moins partiellement ledit motif (3, 23), et
ledit capteur (4) est un capteur piézoélectrique, ledit élément de détection (5) comprenant un réseau de sous-unités de capteur (8_{i,j}),
dans lequel ledit motif (3, 23) comprend des éléments de motif ayant une profondeur et/ou une hauteur prédéfinies.

2. Kit selon la revendication 1, ledit élément de détection (5) comprenant au moins 10 x 10 sous-unités de capteur (8_{i,j}).

3. Kit selon l'une quelconque des revendications précédentes, dans lequel ledit élément de détection (5) a une résolution d'au moins 2 sous-unités de capteur (8_{i,j}) par mm, de préférence au moins 4 sous-unités de capteur (8_{i,j}) par mm, plus préférablement au moins 10 sous-unités de capteur (8_{i,j}) par millimètre.

4. Kit selon l'une quelconque des revendications précédentes, dans lequel ledit élément de détection (5) présente une géométrie plane.

5. Kit selon l'une quelconque des revendications 1 à 3, dans lequel ledit élément de détection (115) présente une géométrie non plane, telle qu'une partie d'une surface d'enveloppe d'un cylindre ou d'une sphère.

6. Kit selon l'une quelconque des revendications précédentes, dans lequel ledit élément de détection est flexible, lui permettant ainsi d'être adapté pour se conformer à au moins une partie de la topographie d'une surface dudit objet, par exemple autour d'un arbre dudit objet.

7. Kit selon l'une quelconque des revendications précédentes, dans lequel ledit motif (32, 32', 113) s'étend autour, ou considérablement autour, d'un périmètre dudit objet (31, 112), par exemple autour d'un arbre dudit objet.

8. Kit selon l'une quelconque des revendications précédentes, dans lequel ledit élément de détection (115) dudit capteur (114) est adapté pour suivre au moins 20 %, de préférence au moins 30 %, plus préférablement au moins 40 %, le plus préférablement au moins 50 % dudit périmètre dudit objet (112).

9. Kit selon l'une quelconque des revendications précédentes, dans lequel ledit capteur (4) est configuré pour une connexion sans fil.

10. Kit selon l'une quelconque des revendications précédentes, dans lequel ledit motif sur ledit objet (2, 22) comprend des données de référence.

11. Kit selon l'une quelconque des revendications précédentes, dans lequel ledit motif (3, 23) comprend un code unique pour ledit objet (2, 22), sur lequel ledit motif (3, 23) est situé.

12. Procédé (80) pour déterminer la tension d'un objet non vivant (2, 22) au moyen d'un motif macroscopique (3, 23) situé sur ledit objet (2, 22), ledit procédé comprenant
- l'acquisition de données au moyen d'un capteur (4), ledit capteur (4) comprenant un élément de détection (5) agencé pour acquérir des données comprenant un tableau de valeurs de mesures dudit motif (3, 23), ledit réseau ayant au moins deux dimensions,
- l'envoi desdites données directement ou indirectement dudit capteur (4) à un dispositif d'analyse (6),
- l'analyse desdites données pour déterminer ladite tension dudit objet (2, 22), ledit capteur (4) étant un capteur piézoélectrique, ledit capteur (4) étant un capteur à contact adapté pour fonctionner en contact direct avec ledit objet (2, 22), de telle sorte que ledit élément de détection (5) est en contact avec ledit objet (2, 22), ledit élément de détection (5) comprenant un réseau de sous-unités de détection (8_{i,j}), et ledit motif (3, 23) comprenant des éléments de motif ayant une profondeur et/ou une hauteur prédéfinies.

13. Procédé selon la revendication 12, dans lequel ledit motif sur ledit objet (2, 22) comprend des données de référence, qui sont utilisées pour déterminer ladite tension dudit objet (2, 22).

14. Procédé selon la revendication 12 ou 13, dans lequel ledit motif (3, 23) comprend un code unique pour ledit objet (2, 22), sur lequel ledit motif (3, 23) est situé, ledit procédé comprenant en outre :
- la lecture dudit code au moyen d'une clé de chiffrement, par exemple fournie sous forme d'algorithme dans ledit dispositif d'analyse (6), découvrant ainsi une identité dudit objet (2, 22).
